Europäisches Patentamt

European Patent Office

Office européen des brevets

(11) Publication number: 0 612 167 A2

# EUROPEAN PATENT APPLICATION

(21) Application number: 94102325.1

(22) Date of filing: 16.02.94

(51) Int. Cl.⁵: H04L 7/027

(30) Priority: 18.02.93 US 19475

(43) Date of publication of application:
24.08.94 Bulletin 94/34

(84) Designated Contracting States:
DE FR GB IT

(71) Applicant: Hayes Microcomputer Products, Inc.
5835 Peachtree Corners East
Norcross Georgia 30092 (US)

(72) Inventor: Rife, David C.
4315 Riverlake Way
Lithonia, Georgia 30058 (US)
Inventor: Easley, Matthew F.
1022 Wedgewood Court
Woodstock, Georgia 30188 (US)
Inventor: Tjahjadi, Taruna
2070 Milfield Circle
Snellville, Georgia 30278 (US)

(74) Representative: Patentanwälte Dr. Solf & Zapf
Candidplatz 15
D-81543 München (DE)

(54) Method and apparatus for accurately estimating a clock frequency and for simulating a precision clock oscillator.

(57) A method for estimating the frequency of the symbol clock in an incoming signal so as to match the frequency of the local symbol clock to the frequency of the remote symbol clock. An analog front end (15) samples an incoming signal to provide a sampled signal. A frequency estimator and clock recovery circuit (16) recovers the symbol clock in the incoming signal and performs a Discrete Time Fourier Transform (DTFT) at two frequencies, F1 and F2. The amplitude of the DTFT at F1 is compared with the amplitude of the DTFT at F2 to provide an estimate of the frequency of the symbol clock in the incoming signal. A master clock (20) provides a clock signal to a clock adjustment circuit (23), which divides the clock signal to provide the transmitter symbol clock for the modem (10). The estimate of the frequency of the symbol clock in the incoming signal is used to adjust the divide ratio in the clock adjustment circuit (23) so that the frequency of the transmitter symbol clock of the modem (10) matches the frequency of the symbol clock of the incoming signal. The present invention matches these frequencies within 10 parts per million (ppm). Therefore, a precision symbol clock can be generated using a master clock having an accuracy of only 100 ppm.

EP 0 612 167 A2

## Technical Field

The present invention relates to clock oscillators for modems and more particularly to method and an apparatus for accurately estimating a clock frequency and for generating a symbol clock frequency which has a frequency extremely close to the symbol clock frequency of a connected modem.

## Background of the Invention

When two quadrature amplitude modulation (QAM) modems are communicating in a half-duplex mode they each alternately transmit and receive. When a first modem is receiving it synchronizes its sampling clock with the symbol rate clock of the second, transmitting modem. When the first modem is transmitting the receiver in this modem is not receiving a signal from the second modem and the receiver sampling clock in the first modem free-runs because it does not have a signal with which it can synchronize. When the first modem completes transmitting and the second modem resumes transmitting, the receiver in the first modem will again have a signal with which it can synchronize. Although the clocks in the first modem may be very accurate (for example, within 10 ppm) they are not absolutely accurate (0 ppm) and tend to drift, however slightly. In addition, the clocks in the second modem may also be very accurate, but are not absolutely accurate, and will also drift, however slightly. If the clocks in the first and second modems have approximately the same frequency, and if the relative drift between these clocks is small, and if the transmission period is not excessive then the two clocks will stay in synchronization, or nearly so, and the receiver in the first modem will be able to quickly resynchronize with the symbol clock in the second modem when the second modem resumes transmitting. If the drift is excessive then synchronisation will be lost and the first modem will not be able to synchronize with the second modem. The first modem will then have to instruct the second modem to send a retraining sequence in order for the clock in the first modem to resynchronize with the clock in the second modem.

Generally, most or all of the clock signals in a modem are derived from a common source, such as a crystal oscillator. Therefore, unless some action is taken, all of the clocks in the modem will tend to be off by the same degree, and in the same direction, and will tend to drift similarly. In these modems, in order for the sampling clock in the first modem to stay synchronized with the symbol clock in the second modem when the first modem is transmitting, the first modem will generally use a high precision oscillator to generate the sampling clock and the second modem will use a high precision oscillator to generate the symbol clock. The high precision oscillators provide for very stable clock frequencies and therefore the relative drift between the clocks will be very small during the period when a modem is transmitting and the sampling clock in its receiver is free-running. In addition, because the symbol rate will be approximately the same regardless of which modem is transmitting, the design of the symbol rate recovery circuit is considerably simplified when the symbol rate used by one modem is exactly the same as the symbol rate of the second modem.

Some modems operating in the half-duplex mode at high transmission rates, such as 9600 bits per second (bps) and higher, require clocks having very high accuracy, such as 10 parts per million (ppm). In this case the symbol clocks will match very closely so that, during half-duplex operation, the receiver sampling clock of the sending modem will not drift excessively and will stay synchronized with or can easily resynchronize with the symbol clock of the receiving modem. Clocks having an inherent accuracy of 10 ppm are expensive and it is desirable to be able to use clocks having less accuracy. However, clocks having less accuracy will tend to drift more and may result in loss of synchronization between the clocks during the time that is allocated for a modem to transmit.

It is theoretically possible to design a modem that synchronizes its internal clock with some public time standard. However, readily available public time standards, such as power line frequencies, vary from country to country and do not have the required accuracy. Other standards, such as WWV or the color television subcarrier frequency (approximately 3.58 MHz) have good accuracy but are not conveniently and reliably available in every place at all times.

Therefore, there is a need for a method and an apparatus for accurately estimating the difference between the frequency of a remote clock and the frequency of a local clock.

There is also a need for a method and an apparatus for accurately determining the difference between the frequency of the symbol clock of a first modem and the frequency of the symbol clock of a second modem so that, even when using a less expensive clock, the symbol clock of the second modem is closely matched to the symbol clock of the first modem.

## Summary of the Invention

The present invention provides a method and an apparatus for estimating the difference between the frequency of a remote clock and the frequency of a local clock. The difference is used to adjust the frequency of the transmitted clock signal, so that the frequency of the transmitted clock signal is approximately the same as the frequency of the remote clock.

The present invention provides a method for matching a local clock to a remote clock by receiving an incoming signal, the incoming signal having a remote clock frequency, determining the magnitude of the Discrete Time Fourier Transform (DTFT) of the remote clock at a first frequency, determining the magnitude of the DTFT of the remote clock at a second frequency, comparing the magnitude of the DTFT at the first frequency with the magnitude of the DTFT at the second frequency to provide an estimated remote clock frequency for the incoming signal, generating the local clock, and adjusting the frequency of the local clock to be approximately the same as the estimated remote clock frequency. In the present invention, the local symbol clock is matched to the remote symbol clock.

The present invention also provides an apparatus for matching a local clock to a remote clock, comprising first means for receiving an incoming signal, the incoming signal having a remote clock frequency, second means connected to said first means for determining the magnitude of a first DTFT of the remote clock at a first frequency and for determining the magnitude of a second DTFT of the remote clock at a second frequency, third means for comparing the magnitude at the first frequency with the magnitude at the second frequency to provide an estimated remote clock frequency for the incoming signal, a clock for generating a local clock, and fourth means for adjusting the frequency of the local clock to be the same as the estimated remote clock frequency.

The present invention also provides a method for estimating the frequency of a remote clock, comprising the steps of receiving an incoming signal, the incoming signal containing the remote clock, determining the magnitude of the DTFT of the remote clock at a first frequency, determining the magnitude of the DTFT of the remote clock at a second frequency, and comparing the magnitude at the first frequency with the magnitude at the second frequency to provide an estimated remote clock frequency for the incoming signal.

The present invention also provides an apparatus for estimating the frequency of a remote clock, comprising first means for receiving an incoming signal, the incoming signal containing the remote clock, second means, connected to the first means, for determining the magnitude of a first DTFT of the remote clock at a first frequency, and for determining the magnitude of a second DTFT of the remote clock at a second frequency, and third means for comparing the magnitude at the first frequency with the magnitude at the second frequency to provide an estimated remote clock frequency for the incoming signal.

The present invention also provides a method for a first modem to estimate the frequency of a remote clock in a second modem, comprising a second modem procedure comprising the steps of receiving a signal from the first modem, the signal containing a first clock, determining the magnitude of the DTFT of the remote clock at a first frequency, determining the magnitude of the DTFT of the remote clock at a second frequency, and comparing the magnitude at the first frequency with the magnitude at the second frequency to provide an estimated clock frequency for the first clock, and providing the estimated clock frequency to the first modem, and a first modem procedure comprising the steps of providing the signal to the second modem, receiving the estimated clock frequency from the second modem, and determining the frequency of the remote clock from the estimated clock frequency.

The present invention also provides a method for a first modem to obtain a estimate of the frequency a clock in the first modem from a second modem, comprising a second modem procedure comprising the steps of receiving a signal from the first modem, the signal containing the clock, determining the magnitude of the DTFT of the clock at a first frequency, determining the magnitude of the DTFT of the clock at a second frequency, and comparing the magnitude at the first frequency with the magnitude at the second frequency to provide an estimated clock frequency for the first clock, ad providing the estimated clock frequency to the first modem.

The present invention also provides a method for a first modem to estimate the frequency of a remote clock in a second modem, comprising a first modem procedure comprising the steps of providing a signal to the second modem, the signal containing a first clock, receiving the estimated clock frequency from the second modem, and determining the frequency of the remote clock from the estimated clock frequency.

The present invention determines two elements of a DTFT of the incoming clock signal, one at a frequency below the internal symbol clock frequency, and the other at a frequency above the internal symbol clock frequency. The DTFT provides a magnitude value for the incoming clock signal at each of these frequencies. These magnitude values are then compared with each other to determine if the incoming symbol clock frequency is different from the internal symbol clock frequency and, if so, by what amount. If there is a difference, then the internal symbol clock frequency is adjusted to be approximately the same as the symbol clock frequency of the incoming signal.

The present invention also provide an apparatus for matching a local clock to a remote clock, comprising a receiver circuit operative to receive an incoming signal, the incoming signal containing the remote clock, the remote clock having a remote clock frequency, a filter circuit connected to the receiver circuit and responsive to the incoming signal to provide a recovered remote clock signal, a discrete Fourier transform and comparison circuit, connected to the filter circuit, and responsive to the recovered remote clock signal to provide the magnitude of a first Discrete Time Fourier Transform (DTFT) of the recovered remote clock at a first frequency, to provide the magnitude of a second DTFT of the recovered remote clock at a second frequency, and to compare the magnitude at the first frequency with the magnitude at the second frequency to provide an estimated remote clock frequency, a clock for generating the local clock, and a clock adjustment circuit connected to the local clock and to the discrete Fourier transform and comparison circuit and responsive to the estimated remote clock frequency to adjust the frequency of the local clock to be the estimated remote clock frequency. In the preferred embodiment the filter circuit processes the incoming signal in a non-linear manner to provide the recovered remote clock and the filter circuit and the discrete Fourier transform and comparison circuit are embodied in a microprocessor.

The present invention also provides an apparatus for estimating the frequency of a remote clock, comprising a receiver circuit operative to receive an incoming signal, the incoming signal containing the remote clock, a filter circuit connected to the receiver circuit and responsive to the incoming signal to provide a recovered remote clock signal, and a discrete Fourier transform and comparison circuit, connected to the filter circuit, and responsive to the recovered remote clock signal to provide the magnitude of a first Discrete Time Fourier Transform (DTFT) of the remote clock at a first frequency, to provide the magnitude of a second DTFT of the remote clock at a second frequency, and to compare the magnitude at the first frequency with the magnitude at the second frequency to provide an estimated remote clock frequency. In the preferred embodiment of the present invention the filter circuit processes the incoming signal in a non-linear manner to provide the recovered remote clock and the filter circuit and the discrete Fourier transform and comparison circuit are embodied in a microprocessor.

Because the internal symbol clock frequency has been adjusted to be the same as the symbol clock frequency of the incoming signal, a data communications device using the present invention will be compatible with devices which have a very accurate clock, and also with devices with have a less accurate clock. Furthermore, the present invention uses a less accurate internal clock but simulates a precision clock by adopting the symbol clock frequency of the other device as the value to be used for its own symbol clock frequency. If the connected data communications device requires a highly accurate symbol clock frequency then it will also use a highly accurate symbol clock frequency for transmission and the present invention provides a highly accurate symbol clock frequency for transmissions to the connected device by adjusting its own internal symbol clock frequency to match. If the connected data communications device can accept a less accurate symbol clock frequency then it will also use a less accurate symbol clock frequency so as to save the cost of a highly accurate clock. In this case the present invention provides a symbol clock frequency of the same accuracy by adjusting its own internal symbol clock frequency to match. Therefore, the present invention provides a symbol clock frequency which is as accurate as the incoming symbol clock frequency without having to use a highly accurate clock to generate its own internal symbol clock frequency.

**Brief Description of the Drawing**

Figure 1 is a block diagram of the preferred embodiment of the present invention in its preferred environment.

Figure 2 is a block diagram of the frequency estimator and clock recovery circuit.

Figure 3 illustrates the signal spectrum provided by the non-linear clock recovery process.

Figure 4 is an illustration of a portion of a handshaking sequence to select data transmission rates of up to 9600 bps.

Figure 5 is a flow chart of the frequency estimation process of the present invention.

Figure 6 illustrates the error in the estimated frequency as a function of the estimated frequency.

**Detailed Description of the Invention**

Turn now to the drawing in which like numerals reference like components throughout the several figures. Although shown as discrete components for clarity of illustration and explanation, components 13, 14, 16 and 23 are preferably implemented by one or more microprocessors. The use of microprocessors for modem control and to process both incoming and outgoing data in a modem is well known to those of skill in the art. For example, see U.S. Patent No. 4,808,937 and U.S.

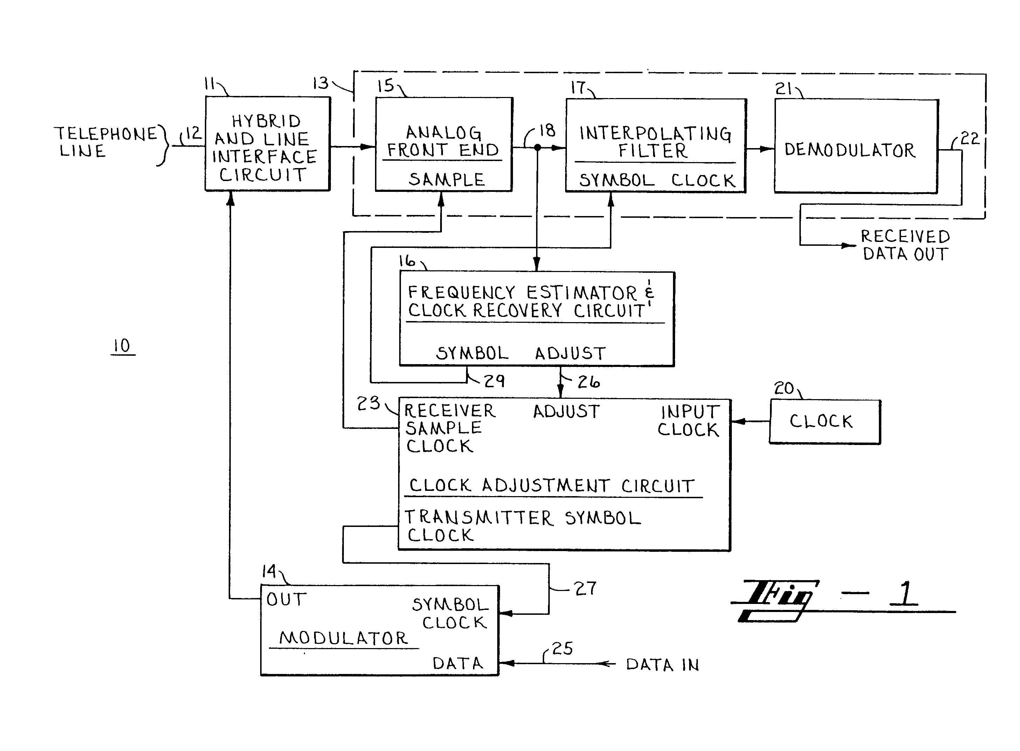

Patent No. 4,894,847. Figure 1 is a block diagram of the preferred embodiment of the present invention in its preferred environment. A half-duplex 9600 bits per second (bps) modem 10 has a hybrid and line interface circuit 11 for routing signals from telephone line 12 to modem receiver 13, and for routing signals from modem modulator (transmitter) 14 onto telephone line 12. The signals on line 12 have a symbol rate of approximately 2400 symbols per second. Receiver 13 has an analog front end (AFE) 15 which samples the incoming signal from telephone line 11 at the preferred rate of approximately either 7200 or 9600 samples per second to provide a sampled incoming signal, converts this sampled incoming signal into a digital incoming signal, and provides this digital incoming signal on line 18. AFE 15 performs the sampling process in response to a SAMPLE signal from clock adjustment circuit 23. Ideally, the SAMPLE signal should cause samples to be obtained at the zero-crossing points of the symbol clock contained in the incoming signal on telephone line 12. The output of AFE 15 is provided to an interpolating filter 17. The use of an interpolating filter to compensate for differences between the frequency of the sampling clock of the local modem and the ideal sampling frequency for a signal having the symbol clock frequency used by the remote modem is well known. For example, see U.S. Patent No. 5,018,166. A frequency estimator and clock recovery circuit 16 recovers the symbol clock in the incoming signal and provides the recovered symbol clock to interpolating filter 17. The output of interpolating filter 17 is provided to a demodulator 21. Demodulator 21 demodulates the signal from interpolating filter 17 to recover the data contained in the incoming signal and provides the recovered data as the RECEIVED DATA OUT signal on line 22. The RECEIVED DATA OUT signal on line 22 is provided to an external device, such as a Data Terminal Equipment (DTE) (not shown), which uses the recovered data. An example of a typical DTE is a computer.

The design and construction of hybrid 11, AFE 15, interpolating filter 17, and demodulator 21 are well known to those of ordinary skill in the art.

The DTE (not shown) also typically provides data to be transmitted over telephone line 12 via modem 10. The DATA IN signal on line 25 provided by the external device is connected to the DATA input of modulator 14. Modulator 14 responds to the DATA IN signal on line 25 and a TRANSMITTER SYMBOL. CLOCK signal on line 27 by providing a modulated signal for transmission over telephone line 12. The TRANSMITTER SYMBOL CLOCK signal on line 27 controls the data transmission rate of modulator 26. For example, a data transmission rate of 9600 bps would typically require the TRANSMITTER SYMBOL CLOCK signal on line 27 to have a frequency of 2400 symbols per second. The design and construction of modulator 14 is well known to those of ordinary skill in the art.

The output of AFE 15 is also provided to frequency estimator & clock recovery circuit 16. This circuit, described in more detail below, provides two outputs: SYMBOL, and ADJUST. The SYMBOL output on line 29 is the recovered symbol clock and is provided to the SYMBOL CLOCK input of interpolating filter 17. The ADJUST output on line 26 indicates the difference between the local clock and the remote clock and is provided to the ADJUST input of clock adjustment circuit 23. Clock 20 is a crystal controlled oscillator which has a precision of 100 parts per million (ppm), represents the master or system clock, and provides a reference clock signal to the CLOCK input of clock adjustment circuit 23. Clock adjustment circuit 23 divides the frequency of the master clock signal from clock 20 by the ratio necessary to cause the RECEIVER SAMPLE CLOCK signal to be 7200 or 9600 samples per second, as required for the particular signal being received, and causes the TRANSMITTER SYMBOL CLOCK signal to be 2400 symbols per second, or other value as required for other modes of communication.

If clock 20 were a high precision clock, having an accuracy of 10 ppm, then clock adjustment circuit 23 could simply provide a fixed divide ratio in order to generate the RECEIVER SAMPLE CLOCK and the TRANSMITTER SYMBOL CLOCK from the clock signal 30. However, in the preferred embodiment, clock 20 has an accuracy of only 100 ppm. Therefore, clock adjustment circuit 23 is also responsive to ADJUST signal 26 so that clock adjustment circuit 23 makes fine adjustments to the divide ratio so as to provide the sample and symbol clocks with the required accuracy. The frequency of the SAMPLE clock is then the desired frequency, such as an integer multiple of the frequency of the symbol clock of the remote modem and the frequency of the TRANSMITTER SYMBOL CLOCK of the local modem is then equal to the frequency of the transmitter symbol clock of the remote modem.

There is a large base of installed modems which have and require a symbol clock accuracy of 10 ppm. However, the 10 ppm accuracy crystal oscillator in these modems is a relatively expensive item. The present invention allows communications with these modems but uses a 100 ppm accuracy crystal oscillator instead. In the preferred embodiment, the absolute accuracy of SYMBOL CLOCK signal on line 27 is not critical. The preferred embodiment operates under the criteria that the SYMBOL CLOCK signal on line 27 is sufficiently accurate if it is within 10 ppm of the symbol clock of the modem (not shown) connected at the other end of telephone line 12. Therefore, in the preferred embodiment, the symbol clock of the connected modem is determined and then the SYMBOL CLOCK signal on line 27 is adjusted to match within 10 ppm.

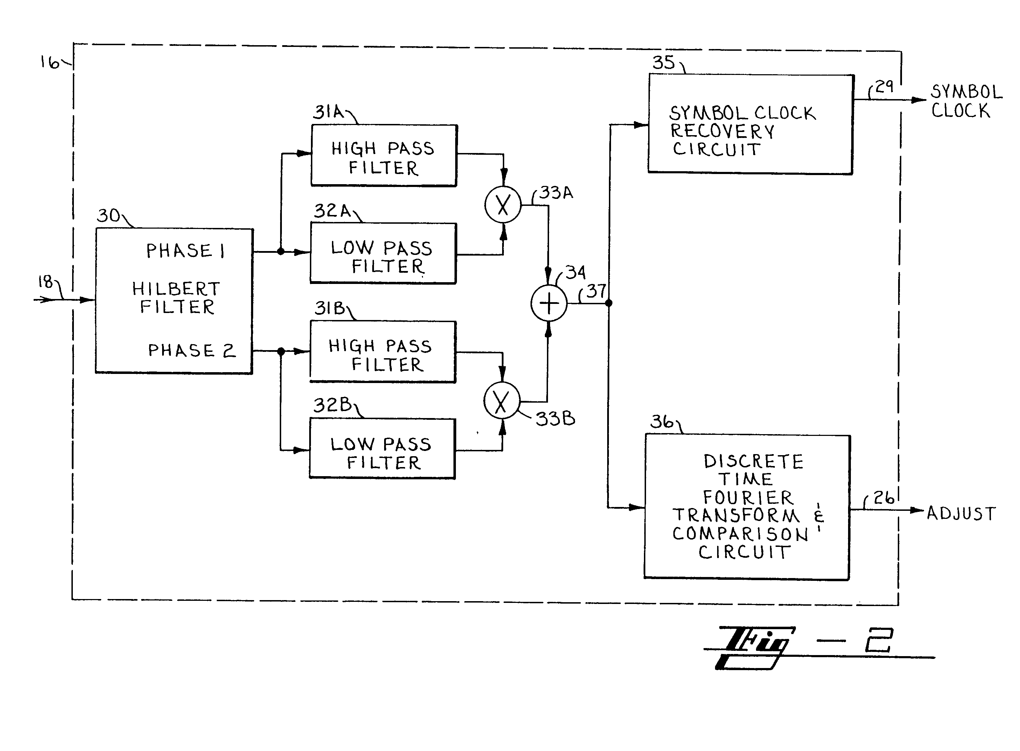

Figure 2 is a block diagram of the frequency estimator and clock recovery circuit 16. Circuit 16 has a Hilbert filter 30, two high pass filters 31A and 31B which each have a cutoff frequency of 2400 Hz, two low pass filters 32A and 32B which each have a cutoff frequency of 1200 Hz, two multipliers 33A and 33B, an adder 34, a symbol clock recovery circuit 35, and a Discrete Time Fourier Transform (DTFT) & comparison circuit 36. The filters 31 and 32 attenuate the 1800 Hz carrier. Filter 30 provides two outputs, Phase 1 and Phase 2, which have a phase difference of 90 degrees across the frequency range of interest, 300 Hz to 3000 Hz. The Phase 1 output is connected to the input of high pass filter 31A and the input of low pass filter 32A. The output of filter 31A and the output of filter 32A are connected to the inputs of multiplier 33A. The output of multiplier 33A is connected to one input of adder 34. Similarly, the Phase 2 output is connected to the input of high pass filter 31B and the input of low pass filter 32B. The output of filter 31B and the output of filter 32B are connected to the inputs of multiplier 33B. The output of multiplier 33B is connected to the other input of adder 34. The output of adder 34 on line 37 is connected to the input of symbol clock recovery circuit 35 and to the input of DTFT & comparison circuit 36.

It is well known to use a combination of components 30-34 to implement a non-linear process so as to recover a clock signal, such as the signal on line 37, from an incoming signal. This recovered clock signal is a noisy symbol clock and has a spectrum which has a peak at the symbol clock frequency.

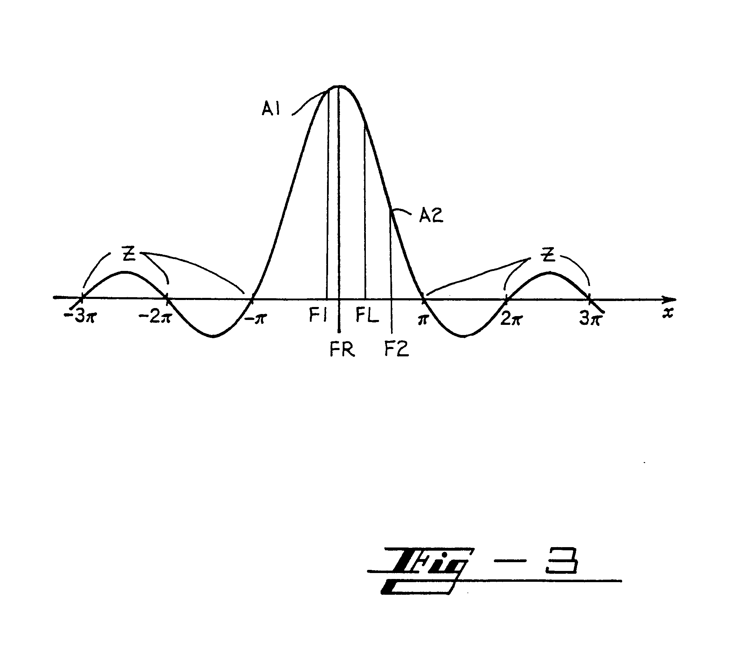

Figure 3 illustrates the signal spectrum provided by the non-linear clock recovery process. This signal is used by symbol clock recovery circuit 35 to recover the frequency of the symbol clock of the remote modem. The design and construction of symbol clock recovery circuit 35 are well known in the art. For example, see U.S. Patent No. 4,849,703.

The spectrum on line 37 produced by the combination of components 30-34 also has components at other frequencies. This characteristic is advatageously used in the present invention to determine the difference between the frequency FR of the remote symbol clock and the frequency FL of the local symbol clock so that this difference can be minimized. More particularly, circuit 36 takes the Discrete Time Fourier Transform (DTFT) of the signal on line 37 at two frequencies, one frequency F1 below the local symbol clock frequency, and one frequency F2 above the local symbol clock frequency. Circuit 36 then determines the magnitude A1 of the DTFT at frequency F1, determines the magnitude A2 of the DTFT at frequency F2, and compares the magnitudes (A1 and A2) to determine the frequency of the remote clock with respect to the frequency of the local clock. In the preferred embodiment, the local symbol clock frequency FL is 2400 Hz, F1 is FL less 200 ppm, and F2 is FL plus 200 ppm. Therefore, F1 and F2 have frequencies of 2399.52 and 2400.48 Hertz, respectively. If the remote symbol clock frequency and the local symbol clock frequency are the same then the spectrum will be balanced and the magnitude A1 of the DTFT of the signal on line 37 at frequency F1 will be the same as the magnitude A2 of the DTFT of the signal on line 37 at frequency F2. However, if the remote and local symbol clock frequencies differ, as shown in Figure 3, then the spectrum will not be balanced and the magnitudes A1 and A2 will be different. By comparing the magnitudes, the difference between the local symbol clock and the remote symbol clock can be precisely determined. The frequency of the local symbol clock is then adjusted to precisely match the frequency of the remote symbol clock. The symbol clock frequency provided to the remote modem will then be the same as the symbol clock frequency provided by the remote modem. The remote modem will therefore determine that it is connected to a modem which has a symbol clock with the required accuracy.

If the magnitude A1 of the DTFT at F1 is greater than the magnitude A2 of the DTFT at F2 then the frequency of the symbol clock in the incoming signal is less than FL. Conversely, if the magnitude A1 of the DTFT at F1 is less than the magnitude A2 of the DTFT at F2 then the frequency of the symbol clock in the incoming signal is greater than FL. Circuit 36 therefore provides an ADJUST signal to adjustment circuit 23 to adjust the divide ratio so that the frequency of SYMBOL CLOCK signal 27 matches the frequency of the symbol clock in the incoming signal. This result holds true regardless of the actual frequency of the clock signal provided by clock 20.

Assume, for example, that the frequency of clock signal provided by clock 20 is slightly less than it should be, so that the local SYMBOL CLOCK signal on line 27 has a actual frequency (FL) of 2399.9 Hertz. In this case F1 and F2 will actually be 2399.42 (-200 ppm) and 2400.38 (+200 ppm) Hertz, respectively. If the frequency (FR) of the symbol clock of the incoming signal is, for example, exactly 2400 Hertz, then the magnitude A1 will be greater than the magnitude A2 because 2400 Hertz is closer to F2 (2400.38 Hertz) than to F1 (2399.42 Hertz). Consequently, circuit 36 will determine that the frequency FR of the symbol clock in the incoming signal is greater than FL, and so circuit 36 will cause clock adjustment circuit 23 to increase the frequency FL of the SYMBOL CLOCK signal on line 27 so that the frequency FL of the SYMBOL CLOCK signal on line 27 matches the frequency FR of the symbol clock in the incoming signal.

A similar result occurs if the frequency of the symbol clock of the incoming signal is, for example, exactly 2400 Hertz, and the frequency of clock signal provided by clock 20 is slightly higher than it should be. That is, magnitudes A1 and A2 will not be balanced, so circuit 36 will indicate that the frequency FR of the symbol clock in the incoming signal is less than FL, and clock adjustment circuit 23 will decrease the frequency FL of the SYMBOL CLOCK signal on line 27 so that the frequency FL of the SYMBOL CLOCK signal on line 27 matches the frequency FR of the symbol clock in the incoming signal.

Assume now that the frequency of clock signal 20 is slightly less than it should be, so that the SYMBOL CLOCK signal on line 27 has a frequency of 2399.9 Hertz, and that the frequency in the symbol clock of the incoming signal is also 2399.9 Hertz. The magnitude A1 will now be the same as the magnitude A2 because the 2399.9 Hertz frequency FR of the remote symbol clock is as close to F2 (2400.38) Hertz as it is to F1 (2399.42 Hertz). Consequently, circuit 36 will not cause clock adjustment circuit 23 to change the frequency FL of the SYMBOL CLOCK signal on line 27 because the frequency of the SYMBOL CLOCK signal on line 27 already matches the frequency FR of the symbol clock in the incoming signal.

Therefore, regardless of the actual value of FL, if the frequency FR of the symbol clock in the incoming signal is different than FL then magnitudes A1 and A2 will be unbalanced and circuit 36 will cause clock adjustment circuit 23 to adjust the frequency FL of the local SYMBOL CLOCK signal on line 27 to be the same as the frequency FR of the remote symbol clock of the incoming signal. This allows the use of a less accurate, and therefore less expensive, oscillator for clock 20 because the symbol clock provided by modem 10 will always match the symbol clock of the connected modem.

If it can be determined or agreed that only one of the modems, such as local modem 10, uses the present invention and that the other (remote) modem does not then it would be useful to continually adjust the frequency of the SYMBOL CLOCK signal on line 27 in the local modem so that the symbol clock frequencies always match, regardless of any drift in the clock of the remote modem.

However, if both modems were to continually use the present invention then any inaccuracies in the DTFT process, the comparison process, or the resolution of the adjustment circuit 23, may cause a feedback loop which results in hunting or instability. Therefore, in the preferred embodiment, the modems which use the present invention perform the adjustment process only once, at the beginning of the communications process.

More particularly, at the end of the initial training process each modem will adjust the frequency of its symbol clock. Also, each modem adjusts the frequency of its symbol clock after it has received a retraining sequence, if a retraining sequence should become necessary during the communications process.

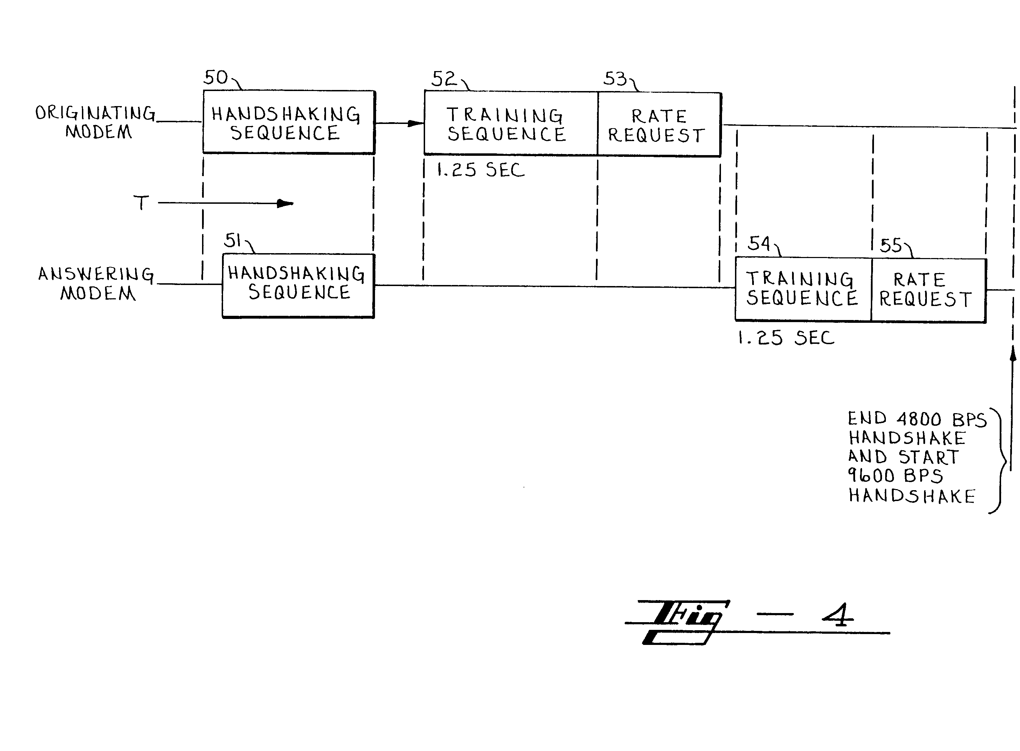

U.S. Patent No. 4,849,703 also describes a technique for handshaking to select data transmission rates of up to 9600 bps. Figure 4 is an illustration of a portion of this handshaking sequence. The originating modem will send a first sequence 50 which indicates that a data rate of at least 2400 bps is desired. The answering modem will then send a sequence 51 which affirms the data rate. The originating modem will then send a 1.25 second training sequence 52, followed by a rate request 53 which indicates that 9600 bps operation is desired. In response to training sequence 52, the answering modem of the preferred embodiment will execute conventional training operations, such as equalization, and will also estimate the symbol clock frequency of the originating modem and then adjust its own symbol clock frequency to be the same. The answering modem will then send a training sequence 54, followed by a rate request 55 which indicates that 9600 bps operation is acceptable. In response to training sequence 54, the originating modem of the preferred embodiment will execute conventional training operations and will also estimate the symbol clock frequency of the answering modem and then adjust its own symbol clock frequency to be the same. The two modems will then proceed to send training sequences for 9600 bps and execute conventional training operations for 9600 bps. The two modems could also adjust their symbol clock frequencies in response to the 9600 bps training sequences. However, in the preferred embodiment, the two modems will not adjust their symbol clock frequencies in response to the 9600 bps training sequences. This prevents a symbol clock frequency feedback loop from occurring.

If neither the originating modem nor the answering modem is constructed in accordance with the present invention then, obviously, neither modem will adjust its symbol clock frequency. If the originating modem is constructed in accordance with the present invention, but the answering modem is not constructed in accordance with then, in response to training sequence 54, the originating modem will adjust its symbol clock frequency to match the symbol clock frequency of the answering modem. The answering modem will then resynchronize its sampling clock to the new symbol clock frequency of the originating modem

If the originating modem is not constructed in accordance with the present invention, but the answering modem is constructed in accordance with then, in response to training sequence 52, the answering modem will adjust its symbol clock frequency to match the symbol clock frequency of the originating modem.

If both modems are constructed in accordance with the present invention then, in response to training sequence 52, the answering modem will adjust its symbol clock frequency to match the symbol clock frequency of the originating modem and, in response to training sequence 54, the originating modem will adjust its symbol clock frequency to match the symbol clock frequency of the answering modem. However, because the answering modem has attempted to precisely match the symbol clock frequency of the originating modem, the adjustment by the originating modem will be extremely small. Therefore, each modem has adjusted its symbol clock frequency only once and the two symbol clock frequencies will be within 10 ppm of each other.

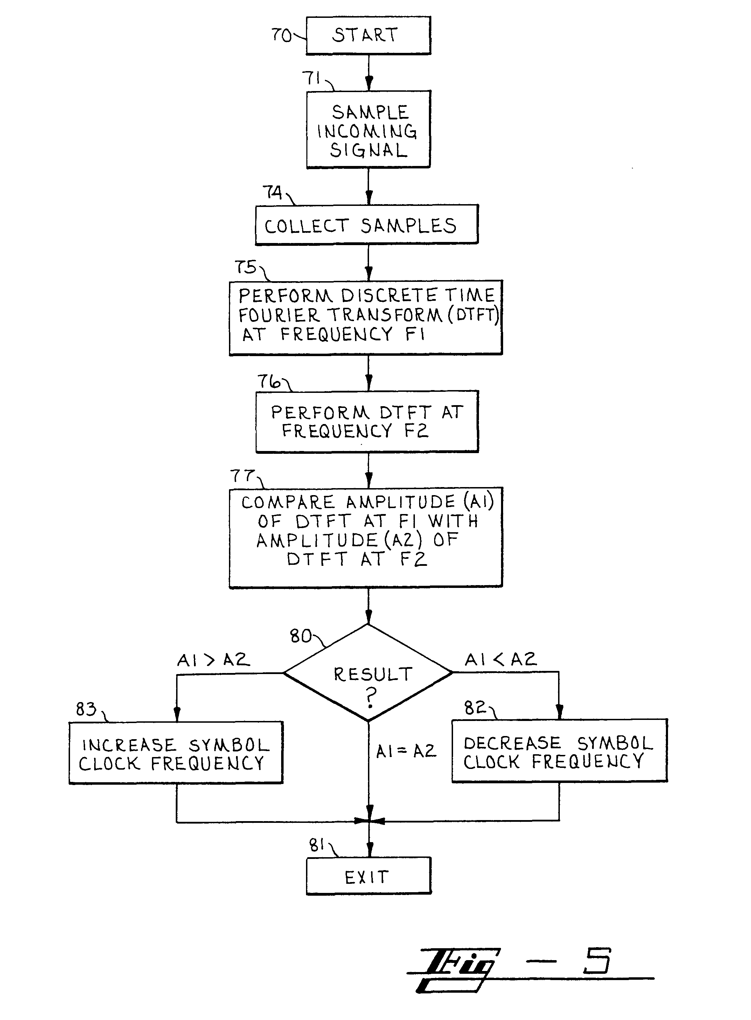

Figure 5 is a flow chart of the frequency estimation process of the present invention. Although Figure 1 shows a block diagram, the preferred implementation of the present invention is with a microprocessor. Therefore, upon starting 70, the microprocessor will cause the incoming signal to be sampled in step 71. In step 74, a sufficient number of samples of the incoming signal are collected to allow Discrete Time Fourier Transforms (DTFT) to be performed. In the preferred embodiment, 4000 samples are collected. In step 75 the amplitude A1 of the DTFT at a frequency F1 is obtained. In step 76 the amplitude A2 of the DTFT at a frequency F2 is obtained. Frequencies F1 and F2 are, as described above, selected to be approximately 200 ppm on either side of the internal symbol clock frequency FL. In step 77 the amplitudes are compared with each other. In decision 80 a determination is made as to the results of the comparison. If the amplitude A1 of the DTFT at F1 is the same as the amplitude A2 of the DTFT at F2 then the internal symbol clock matches the symbol clock of the incoming signal so no adjustment is necessary and the program is exited at step 81. If the amplitude A1 of the DTFT at F1 is less than the amplitude A2 of the DTFT at F2 then the internal symbol clock frequency is higher than the symbol clock frequency of the incoming signal so, in step 82, the internal symbol clock frequency is decreased to match the incoming symbol clock frequency. If the amplitude A1 of the DTFT at F1 is greater than the amplitude A2 of the DTFT at F2 then the internal symbol clock is lower than the symbol clock of the incoming signal so, in step 83, the internal symbol clock frequency is increased to match the incoming symbol clock frequency.

In order to achieve the benefits of the present invention, it is necessary to be able to estimate the frequency of the symbol clock of the other modem to within ±10 ppm. If the incoming signal is sampled at the rate of 9600 samples per second for 1.25 seconds, then there will be approximately 12,000 samples available. Further, the phase locked loop technique of the above-referenced patent will locate the zero crossing point of the incoming symbol clock within about 4 degrees if the recovered symbol clock waveform is in the form of a sinusoid.

The accuracy will, of course, be limited by the noise level and type, any errors due to digital computation, such as roundoff errors, and noise introduced by non-linear processes, such as the process provided by components 30-34. The following equation is used to determine the frequency of the remote symbol clock.

$$FR = FL + K1 \text{*}(A2-A1),$$

where A1 = the magnitude of the N point Discrete Time Fourier Transform (DTFT) evaluated at frequency F1, A2 = the magnitude of the N point DTFT evaluated at frequency F2, T = the period of the receiver sampling clock of modem 10, N is the number of samples used for the DTFT, and K1 = 1.954. In the preferred embodiment, F1 and F2 are set at 200 ppm on either side of FL, 4000 samples are used, and the sampling frequency is 9600 samples per second so T = 1/9600 second.

Returning to the signal spectrum of Figure 3, this spectrum is used by the present invention to determine the frequency FR of the remote symbol clock. The DTFT provides a spectrum of the form

$$\sin (NX)/(N \text{*} \sin (X)).$$

This spectrum has nulls Z at NX = ± $\pi$, and X = ± (FR-FL) $\text{*}\pi\text{*}$T, so the first nulls will appear at (FR-FL) = ± 1/(N*T). If FR and FL each have an accuracy of 100 ppm, then the worst case difference (D = FR-FL) will be 200 ppm at 2400 Hz, or 0.48 Hz. Further, FR will be expected to be in a range of FL-D to FL + D. If T is fixed, for example, at 1/9600 second, then

$$N = 1/(T \text{*} (FR - FL)),$$

which reduces to 20,000 samples. This is the upper limit for N. If N exceeds this limit then the nulls Z will move inside the expected frequency range (FL-D to FL+D) of the incoming clock signal and the results of the computation will be in error. In the preferred embodiment, N = 4000 samples, so (FR-FL) = 2.4 Hz, or 1000 ppm, which is the maximum frequency difference that is allowable with the given sampling period and number of samples. The expected maximum frequency difference is 200 ppm, which is well within the 1000 ppm limit.

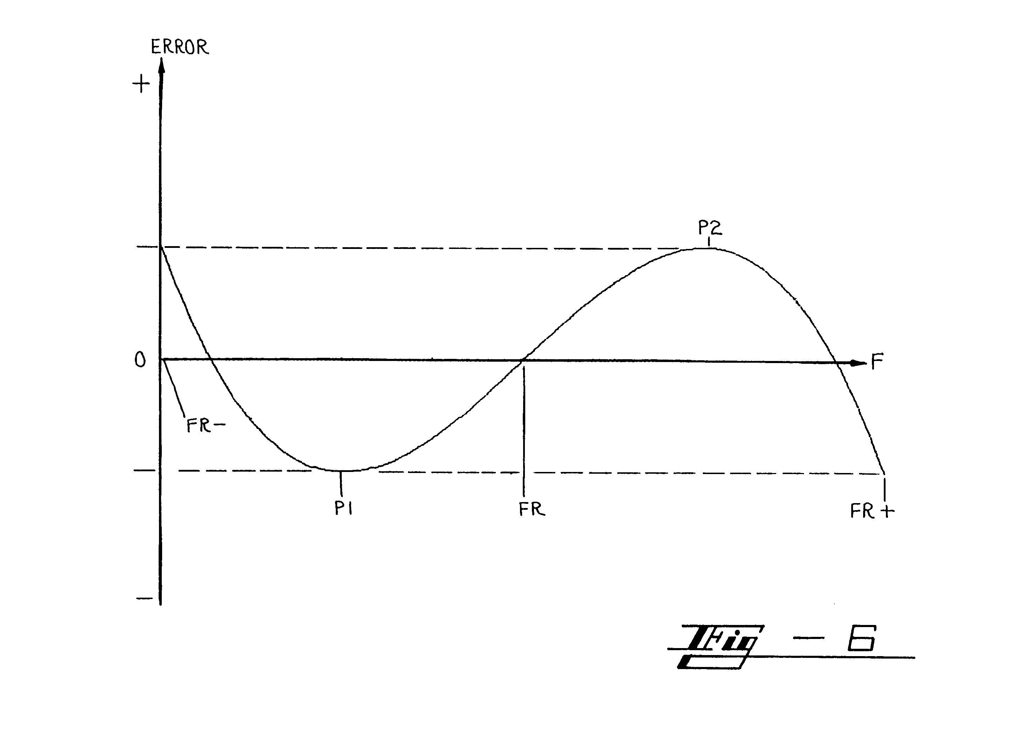

Figure 6 illustrates the error in the estimated frequency as a function of the estimated frequency. The maximum error occurs at the two expected limits (FR plus and minus 200 ppm) and at two points (P1 and P2) within the expected limits. It is possible to further refine the frequency estimate by using a third order function, such as

$$FR = FL + K1*(A2 - A1) + K2*(A2-A1)^3,$$

where K1 is now 1.89538 and K2 is 1.317541. This produces an estimate with less maximum error. It is possible to further refine the estimate by using even higher order functions but the presence of noise reduces the benefit of using the higher order functions. Therefore, the first order equation is more useful to estimate the symbol clock frequency in environments where the noise level may be significant and the third order equation is more useful to estimate the symbol clock frequency in environments where the noise level is less significant.

Although the preferred implementation of the present invention is for adjusting the internal symbol clock frequency of a modem or other data communication device, it will be appreciated that the present invention is also a method for accurately estimating the frequency of an incoming signal with respect to a known frequency, such as an internal clock. The estimate of the frequency would then be provided to another circuit for use, such as adjusting the internal symbol clock frequency, or possibly for recording or display.

For example, a first, or control, modem in a network might have a high precision (10 ppm) clock. The accuracy of the clock in the control modem can be measured precisely. The other modems might have lower precision (100 ppm) clocks and might not be conveniently available for measurement of the clock frequency. The control modem and the remote modem establish communications, whereupon the remote modem estimates the frequency of the control modem. This frequency is a numerical value and can be communicated. The remote modem then sends this value to the control modern This value is used to determine the accuracy of the clock in the remote modem.

For example, if the remote modem advises that the control modem has a symbol clock frequency of exactly 2400 Hz then the clock in the remote modem is correct. However, if the remote modem advises that the control modem has a clock frequency of 2400.01 Hz then the remote modem clock frequency is 0.01 Hz below 2400 Hz, or 2399.99 Hz. If the remote modem advises that the control modem has a clock frequency of 2399.76 Hz, then the remote modem has a clock frequency of 2400.24 Hz. It should be noted that 2400.24 Hz is 100 ppm away from the nominal frequency of 2400 Hz. Therefore, the remote modem clock is at the tolerance limit. This may be used as an indication that the remote modem should be repaired or replaced. This allows a single modem, preferably using a high precision clock, to act as a standard for testing of remote modems.

The present invention also provides another benefit. The symbol clock frequency of the local modem is adjusted to closely match the symbol clock frequency of the remote modem. Therefore, both modems have the same symbol clock frequency. Because the symbol clock frequency of one modem is now the same as the symbol clock frequency of the other modem, a modem can use its own symbol clock as a starting point in locking onto the symbol clock of the other modem. This reduces the design requirements for the symbol clock phase locked loop and allows for faster acquisition of lock and less jitter once lock is achieved.

The present invention provides a method and an apparatus for accurately estimating the frequency of a clock in an incoming signal, such as the symbol clock frequency in a data communications signal, and for adjusting an internal clock, such as the symbol clock in a data communications device such as a modem, so that the internal clock frequency matches the frequency of the clock in the incoming signal. Further, the present invention provides a method and an apparatus for closely matching symbol clock frequencies so as to reduce the lock time ad the jitter in the recovered symbol clock phase locked loop in a modem. In addition, the present invention provides a method for using a single, high precision clock, to estimate the frequency of the clock in remote devices, thereby providing a convenient method for determining if a device is in need or repair or replacement. From the description above, other embodiments of the present invention will suggest themselves to those of skill in the art. Therefore, the scope of the present invention is to be limited only by the claims below.

## Claims

1. A method for matching a local clock to a remote clock, comprising the steps of:

   receiving a incoming signal, said incoming signal containing said remote clock, said remote clock having a remote clock frequency;

   determining the magnitude of the Discrete Time Fourier Transform (DTFT) of said remote clock at a first frequency;

   determining the magnitude of the Discrete Time Fourier Transform (DTFT) of said remote clock at a second frequency;

   comparing said magnitude at said first frequency with said magnitude at said second frequency to provide an estimated remote clock frequency;

   generating said local clock; and

   adjusting the frequency of said local clock to be said estimated remote clock frequency.

2. The method of Claim 1 wherein said step of receiving said incoming signal comprises converting said incoming signal at a predetermined sampling rate to provide a digital incoming signal as said remote clock for said steps of determining said magnitude.

3. The method of Claim 1 wherein said step of receiving said incoming signal comprises:

   converting said incoming signal at a predetermined sampling rate to provide a digital incoming signal; and

   processing said digital incoming signal in a non-linear manner to provide a recovered remote clock as said remote clock for said steps of determining said magnitude.

4. The method of Claim 1 wherein said first frequency is below a predetermined frequency and said second frequency is above said predetermined frequency.

5. The method of Claim 4 wherein said first frequency is approximately 0.02 percent below a predetermined reference symbol clock frequency and said second frequency is approximately 0.02 percent above said predetermined reference symbol clock frequency.

6. The method of Claim 2 or 3 wherein said step of sampling is repeated at intervals of T to obtain N samples of said incoming signal, and N*T is selected to be less than a predetermined value.

7. An apparatus for matching a local clock to a remote clock, comprising:

   first means for receiving an incoming signal, said incoming signal containing said remote clock, said remote clock having a remote clock frequency;

   second means, connected to said first means, for determining the magnitude of a first Discrete Time Fourier Transform (DTFT) of said remote clock at a first frequency, and for determining the magnitude of a second DTFT of said remote clock at a second frequency;

   third means for comparing said magnitude at said first frequency with said magnitude at said second frequency to provide an estimated remote clock frequency;

   a clock for generating said local clock; and fourth means for adjusting the frequency of said local clock to be said estimated remote clock frequency.

8. The apparatus of Claim 7 and further comprising means for processing said incoming signal in a non-linear manner to provide a recovered remote clock as said remote clock to said second means.

9. The apparatus of Claim 7 wherein said second means comprises a microprocessor having a program for performing Discrete Time Fourier Transforms.

10. The apparatus of Claim 7 wherein said third means comprises a microprocessor having a program for estimating said remote clock frequency based upon said amplitudes.

11. A method for estimating the frequency of a remote clock, comprising the steps of:

   receiving an incoming signal, said incoming signal containing said remote clock;

   determining the magnitude of the Discrete Time Fourier Transform (DTFT) of said remote clock at a first frequency;

   determining the magnitude of the DTFT of said remote clock at a second frequency; and

   comparing said magnitude at said first frequency with said magnitude at said second frequency to provide an estimated remote clock frequency for said incoming signal.

12. The method of Claim 11 wherein said step of receiving said incoming signal comprises converting said incoming signal at a predetermined sampling rate to provide a digital incoming signal as said remote clock for said steps of determining said magnitude.

13. The method of Claim 11 wherein said step of receiving said incoming signal comprises:

converting said incoming signal at a predetermined sampling rate to provide a digital incoming signal; and

processing said digital incoming signal in a non-linear manner to provide a recovered remote clock as said remote clock for said steps of determining said magnitude.

14. The method of Claim 11 wherein said first frequency is below a predetermined frequency and said second frequency is above said predetermined frequency.

15. The method of Claim 14 wherein said first frequency is approximately 0.02 percent below a predetermined reference symbol clock frequency and said second frequency is approximately 0.02 percent above said predetermined reference symbol clock frequency.

16. The method of Claim 12 or 13 wherein said step of sampling is repeated at intervals of T to obtain N samples of said incoming signal, and N*T is selected to be less than a predetermined value.

17. An apparatus for estimating the frequency of a remote clock, comprising:

first means for receiving an incoming signal, said incoming signal containing said remote clock;

second means, connected to said first means, for determining the magnitude of a first Discrete Time Fourier Transform (DTFT) of said remote clock at a first frequency, and for determining the magnitude of a second DTFT of said remote clock at a second frequency; and

third means for comparing said magnitude at said first frequency with said magnitude at said second frequency to provide an estimated remote clock frequency for said incoming signal.

18. The apparatus of Claim 17 and further comprising means for processing said incoming signal in a non-linear manner to provide a recovered remote clock as said remote clock to said second means.

19. The apparatus of Claim 17 wherein said second means comprises a microprocessor having a program for performing Discrete Time Fourier Transforms.

20. The apparatus of Claim 17 wherein said third means comprises a microprocessor having a program for estimating said remote clock frequency based upon said amplitudes.

21. A method for a first modem to estimate the frequency of a remote clock in a second modem, comprising:

a second modem procedure comprising the steps of:

receiving a signal from said first modem, said signal containing a first clock;

determining the magnitude of the Discrete Time Fourier Transform (DTFT) of said first clock at a first frequency;

determining the magnitude of the DTFT of said first clock at a second frequency; and

comparing said magnitude at said first frequency with said magnitude at said second frequency to provide an estimated clock frequency for said first clock; and

providing said estimated clock frequency to said first modem; and

a first modem procedure comprising the steps of:

providing said signal containing said first clock to said second modem;

receiving said estimated clock frequency from said second modem; and

determining said frequency of said remote clock from said estimated clock frequency.

22. The method of Claim 21 wherein said step of determining said frequency of said remote clock comprises:

determining the difference between said estimated clock frequency and the frequency of said first clock; and

subtracting said difference from said frequency of said first clock to provide said frequency of said remote clock.

23. A method for a first modem to obtain an estimate of the frequency of a clock in said first modem from a second modem, comprising a second modem procedure comprising the steps of:

receiving a signal from said first modem, said signal containing said clock;

determining the magnitude of the Discrete Time Fourier Transform (DTFT) of said clock at a first frequency;

determining the magnitude of the DTFT of said clock at a second frequency; and

comparing said magnitude at said first frequency with said magnitude at said second frequency to provide an estimated clock frequency for said first clock; and

providing said estimated clock frequency to said first modem.

**24.** A method for a first modem to estimate the frequency of a remote clock in a second modem, comprising a first modem procedure comprising the steps of:

providing a signal to said second modem, said signal containing a first clock;

receiving said estimated clock frequency from said second modem; and

determining said frequency of said remote clock from said estimated clock frequency.

**25.** The method of Claim 24 wherein said step of determining said frequency of said remote clock comprises:

determining the difference between said estimated clock frequency and the frequency of said first clock; and

subtracting said difference from said frequency of said first clock to provide said frequency of said remote clock.

**26.** An apparatus for matching a local clock to a remote clock, comprising:

a receiver circuit operative to receive an incoming signal, said incoming signal containing said remote clock, said remote clock having a remote clock frequency;

a filter circuit connected to said receiver circuit and responsive to said incoming signal to provide a recovered remote clock signal;

a discrete time Fourier transform and comparison circuit, connected to said filter circuit, and responsive to said recovered remote clock signal to provide the magnitude of a first Discrete Time Fourier Transform (DTFT) of said recovered remote clock at a first frequency, to provide the magnitude of a second DTFT of said recovered remote clock at a second frequency, and to compare said magnitude at said first frequency with said magnitude at said second frequency to provide an estimated remote clock frequency;

a clock for generating said local clock; and

a clock adjustment circuit connected to said local clock and to said discrete time Fourier transform and comparison circuit and responsive to said estimated remote clock frequency to adjust the frequency of said local clock to be said estimated remote clock frequency.

**27.** The apparatus of Claim 26 wherein said filter circuit processes said incoming signal in a non-linear manner to provide said recovered remote clock.

**28.** The apparatus of Claim 26 wherein said filter circuit and said discrete time Fourier transform and comparison circuit are embodied in a microprocessor.

**29.** An apparatus for estimating the frequency of a remote clock, comprising:

a receiver circuit operative to receive an incoming signal, said incoming signal containing said remote clock;

a filter circuit connected to said receiver circuit and responsive to said incoming signal to provide a recovered remote clock signal; and

a discrete time Fourier transform and comparison circuit, connected to said filter circuit, and responsive to said recovered remote clock signal to provide the magnitude of a first Discrete Time Fourier Transform (DTFT) of said remote clock at a first frequency, to provide the magnitude of a second DTFT of said remote clock at a second frequency, and to compare said magnitude at said first frequency with said magnitude at said second frequency to provide an estimated remote clock frequency.

**30.** The apparatus of Claim 29 wherein said filter circuit processes said incoming signal in a non-linear manner to provide said recovered remote clock.

**31.** The apparatus of Claim 29 wherein said filter circuit and said discrete time Fourier transform and comparison circuit are embodied in a microprocessor.

Fig — 1

EP 0 612 167 A2

_Fig - 2_

EP 0 612 167 A2

Fig - 3

ORIGINATING MODEM — | HANDSHAKING SEQUENCE | 50 → | TRAINING SEQUENCE | 52 | RATE REQUEST | 53

1.25 SEC

T →

ANSWERING MODEM — | HANDSHAKING SEQUENCE | 51 | TRAINING SEQUENCE | 54 | RATE REQUEST | 55

1.25 SEC

END 4800 BPS HANDSHAKE AND START 9600 BPS HANDSHAKE

Fig — 4

70 — START

71 — SAMPLE INCOMING SIGNAL

74 — COLLECT SAMPLES

75 — PERFORM DISCRETE TIME FOURIER TRANSFORM (DTFT) AT FREQUENCY FI

76 — PERFORM DTFT AT FREQUENCY F2

77 — COMPARE AMPLITUDE (AI) OF DTFT AT FI WITH AMPLITUDE (A2) OF DTFT AT F2

80 — RESULT ?

AI > A2

AI < A2

AI = A2

83 — INCREASE SYMBOL CLOCK FREQUENCY

82 — DECREASE SYMBOL CLOCK FREQUENCY

81 — EXIT

Fig — 5

F

FR +

P2

FR

PI

FR −

ERROR

+

0

−

_Fig − 6_